# EUROPEAN PATENT SPECIFICATION

(11) **EP 1 894 754 B1**
(45) Date of publication and mention of the grant of the patent: **31.03.2010**
(21) Application number: 07075632.5
(22) Date of filing: 24.07.2007
(51) Int. Cl.: B60G 11/113, B60G 9/00, B60G 21/05

(54) **Connecting structure for a wheel axle**
Verbindungsstruktur für eine Radachse
Structure de connexion pour essieu de roue

(30) Priority: 01.09.2006 NL 1032409
(43) Date of publication of application: 05.03.2008
(73) Proprietor: Weweler Nederland B.V., 7332 AP Apeldoorn (NL)
(72) Inventor: Aalderink, Derk Geert, 7245 NV Laren (NL); Everts, Geert, 7722 LL Dalfsen (NL)
(74) Representative: Houben, Christiaan Hein Willem Frans

(56) References cited:
- EP-A- 1 361 085
- EP-A- 1 508 459
- EP-A1- 1 334 848
- EP-A2- 1 249 356
- DE-U1- 29 615 286
- DE-U1- 29 713 996
- FR-A- 1 367 185
- JP-A- 11 291 731
- US-A- 3 428 372
- US-B1- 6 406 008

## Description

The present invention relates to a connecting structure for connecting a round axle body of a wheel axle of a vehicle and a carrier arm, which extends in the longitudinal direction of the vehicle and substantially perpendicularly crosses the axle body, having, positioned between the axle body and the carrier arm, a support part, which is provided with a recess, in which recess part of the axle body is accommodated and which has end parts as seen in the circumferential direction of the axle body, and also having two substantially U-shaped clamping straps which extend around the axle body on either side of the carrier arm and by means of which the support part and that part of the axle body that is accommodated therein are fixed to the carrier arm, wherein the axle body, in the assembled state, is pressed into the recess as a result of a clamping force supplied by the clamping straps, such that it bears against the inner wall of the recess, and wherein the clamping straps bear against the substantially complementary part of the circumference of the axle body.

A connecting structure of this type is known. NL 1024125 describes an axle clamping arrangement in which the support part, which is also known in the field as axle pad, surrounds the circumference of the axle body over more than 180°. In this arrangement, one of the end parts is located at a lower position than the other end part. The limbs of the clamping straps extend along the carrier arm and along the side of the support part.

It is an object of the invention to provide an improved connecting structure for connecting an axle body of a wheel axle to a longitudinal carrier arm of the vehicle.

This object is achieved by a connecting structure of the type described in the preamble of claim 1, characterized in that the clamping straps bear against the outer side of at least one of the end parts of the support part and clamp the at least one end part against the axle body.

In the structure according to the invention, the at least one end part extends in the longitudinal direction of the axle at least as far as between the strap limbs and the axle body, and preferably even beyond the strap limbs. When the connection is being tightened, the end part is pressed against the axle body by that part of the clamping strap which rests over it. The result is a more stable clamping action, in particular when the structure is subject to transverse loads.

Preferred embodiments of the invention are defined in the subclaims.

The invention will be explained in more detail on the basis of a preferred embodiment with reference to the drawing, in which:
Fig. 1 shows a side view of a connecting structure according to the invention, and
Fig. 2 shows a rear view, partly in section, of the connecting structure from Fig. 1.

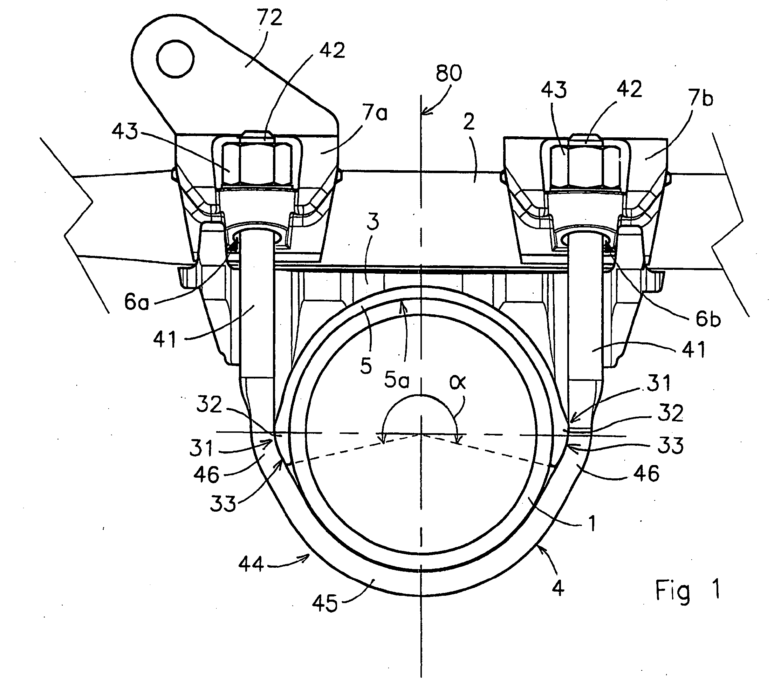

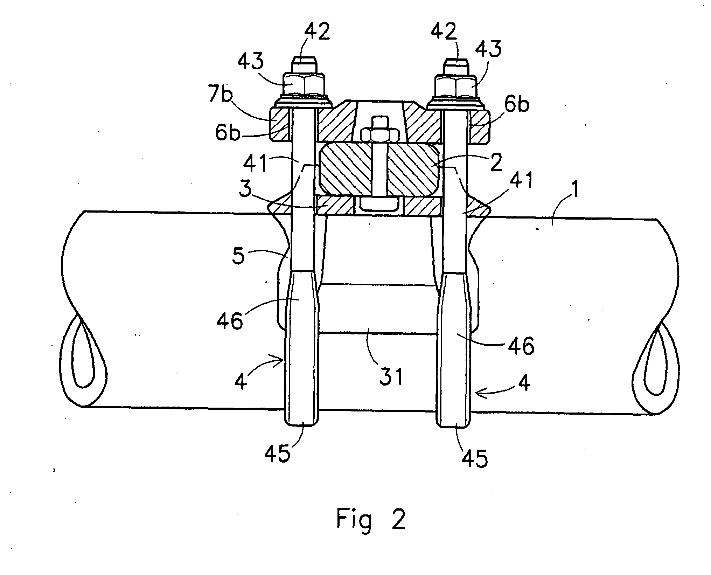

Fig. 1 and Fig. 2 show a wheel axle clamping arrangement of an air suspension system of a vehicle. The figures in particular show the connection between a thin-walled axle body 1 of the wheel axle and a carrier arm 2 which extends in the longitudinal direction of the vehicle and substantially perpendicularly crosses the axle body 1. The axle body 1 is designed as a substantially round tube.

In the exemplary embodiment shown, the carrier arm 2 is designed as a parabolic spring which at one end is mounted pivotably on the chassis (not shown) of the vehicle by means of a link pin (not shown). At the other end, the carrier arm 2 has a section (not shown in the figure) where a bellows (not shown) which extends between the carrier arm 2 and the chassis can be secured.

The connection comprises a support part 3, also known as an axle pad, which is positioned between the axle body 1 and the carrier arm 2. The support part 3 is positioned on the underside of the carrier arm 2. In the embodiment shown, the support part 3 comprises a substantially semi-cylindrical shell 5, which surrounds the axle body 2 over more than 180° and defines a recess in which a part of the axle body 1 can be accommodated. In the example shown in Fig. 1, it can be seen that the axle body 2 is surrounded over an angle α of approximately 205°. The shell 5 is preferably an integral part of the support part 3.

The axle body 1 and the support part 3 are clamped against the underside of the carrier arm 2 by clamping means. The clamping means comprise two substantially U-shaped clamping straps 4, which are positioned around the axle body 1 on either side of the carrier arm (see Fig. 2), and one or more clamping parts 7a, 7b, which are arranged on the top side of the carrier arm 2. Furthermore, a pair of securing lips 72, between which an eyelet of a shock absorber (not shown) can be secured by means of a bolt, are formed integrally on the front clamping part 7a, as seen in the direction of travel.

The limbs 41 of the clamping straps 4 extend upwards substantially parallel to one another along the side of the carrier arm 2 and each fit through a receiving bore 6a and 6b arranged in the clamping parts 7a and 7b, respectively. At their end, the limbs 41 are each provided with a threaded section 42 which can interact with threaded nuts 43, so that the connection can be tightened. When the connection has been tightened, the axle body 1 is accommodated in a force-fitting manner in the recess and is pressed against the inner wall 5a of the substantially semi-cylindrical shell 5.

The support part 3 has end parts 31. The end parts 31 have a thickened portion 32 on the radially outer side. Furthermore, the end parts 31 of the support part 3 have a wedge surface 33 at the end on the outer side. The end parts 31 may be wider than the remainder of the support part 3, but the support part 3 could also be of equal width everywhere. Both end parts 31 extend axially beyond the straps 4, as can be seen in Fig. 2 with regard to the rear end part 31.

The clamping straps 4 have a curved section 44 which connects the limbs 41 of the strap 4. The limbs 41 of a clamping strap 4 are located at a distance from one another that is greater than the radius of the axle body 1. The curved section 44 has a section 45 which, in the assembled state, bears against the axle body 1 and has a radius of curvature that substantially corresponds to the radius of the axle body 1. The transition between the limbs 41 and the constantly curved section 45 bearing against the axle body is formed by a curved section 46 where the radius increases or at least widens, such that a space is formed at that location between the axle body 1 and the clamping strap 4.

The inner side of the widening section 46 of the clamping strap 4 bears against the wedge surface 33 of the end part 31 on each side of the axle body 1. When the clamping straps 4 are tightened, the inner side of the widening part 46 and the end part 31 interact in such a manner that the end parts 31 are clamped against the axle body 1 as a result of the wedge action.

On account of the fact that the widening sections 46 of the straps 4 create space between the straps 4 and the axle body 1, the end parts 31 of the support part 3 can extend through this space and beyond the straps 4. This results in a lower surface pressure, which is of benefit to the service life of the thin-walled axle body 1. The axle clamping arrangement becomes more stable as a result of the wider axle pad, in particular in the event of transverse load.

While the vehicle is in use, the round axle body 1 is subjected to torsional forces, for example under braking. As a result of these torsional forces, the axle body 1 is prone to rotate with respect to the support body 3. The clamping force exerted by the clamping straps 4 is in many cases insufficient to prevent the undesirable rotation. For this reason, the axle body 1 is preferably locked with respect to the support part 3. This locking can be effected by a projection being formed integrally on the support part 3 and a depression being formed in the axle body 1, for example by plastic deformation. This rotational locking structure is known per se from NL 1019766.

The example shown shows a support part and an axle body arranged beneath a straight carrier arm. It should be understood that the invention can also be used in pneumatic suspension systems with curved carrier arms and/or in pneumatic suspension systems in which the axle body is arranged above the carrier arm.

Furthermore, in the embodiment shown, the support part 3, apart from the lips 72, is of symmetrical design with respect to a substantially vertical plane 80 passing through the centre axis of the axle body 1, i.e. the end parts 31 are located at the same height with respect to the centre axis of the axle body and are each clamped against the axle body by a section 46 of the same strap 4. However, it is also conceivable for one end part to be located at a higher position than the centre axis of the axle body and the other end part to be located at a lower position than the centre axis of the axle body, as described in NL 1024125. In this case, according to the present invention, when the axle body is suspended beneath the longitudinal carrier arm, it would be possible for only the lower end part to be clamped between the clamping strap and the axle body, whereas on the other side the clamping strap bears against the axle body by means of one limb. In that case, an asymmetric clamping strap could potentially be used.

## Claims

1. Connecting structure for connecting a round axle body (1) of a wheel axle of a vehicle and a carrier arm (2), which extends in the longitudinal direction of the vehicle and substantially perpendicularly crosses the axle body (1),
having, positioned between the axle body (1) and the carrier arm (2), a support part (3), which is provided with a recess, in which recess part of the axle body (1) is accommodated and which has end parts (31) as seen in the circumferential direction of the axle body (1),
and also having two substantially U-shaped clamping straps (4) which extend around the axle body (1) on either side of the carrier arm (2) and by means of which the support part (3) and that part of the axle body (1) that is accommodated therein are fixed to the carrier arm (2),
wherein the axle body (1), in the assembled state, is pressed into the recess as a result of a clamping force supplied by the clamping straps (4), such that it bears against the inner wall of the recess, and
wherein the clamping straps (4) bear against the substantially complementary part of the circumference of the axle body (1),
**characterized in that** the clamping straps (4) bear against the outer side of at least one of the end parts (31) of the support part (3) and clamp the at least one end part (31) against the axle body (1).

2. Connecting structure according to claim 1, **characterized in that** the inner wall of the recess surrounds that part of the axle body (1) that is accommodated in the recess over an angle of at least 180° in the circumferential direction.

3. Connecting structure according to claim 1 or 2, **characterized in that** the substantially U-shaped clamping straps (4) comprise two substantially parallel and substantially straight limbs (41) with a curved section (44) located between them, which limbs (41) are located at a distance from one another that is greater than the radius of the axle body (1), and which curved section (44) comprises a section which in the assembled state bears against the axle body (1) with a radius of curvature that substantially corresponds to the radius of the axle body (1), and wherein a widening section (46) is present between at least one of the limbs (41) and the constantly curved section (44) bearing against the axle body (1).

4. Connecting structure according to one of claims 1-3, **characterized in that** the at least one end part (31) of the support part (3) against which the clamping straps (4) bear has a thickened portion (32) on the radially outer side.

5. Connecting structure according to one of the preceding claims, **characterized in that** the at least one end part (31) of the support part (3) against which the clamping straps (4) bear is substantially wedge-shaped at the end in order to interact with the widening section (46) of the clamping straps (4) in order to clamp the end part (31) against the axle body (1).

6. Connecting structure according to one of the preceding claims, **characterized in that** the at least one end part (31), as seen in the axial direction of the axle body (1), extends beyond the clamping straps (4).

7. Connecting structure according to one of the preceding claims, **characterized in that** the clamping straps (4) bear against the outer side of both end parts (31) of the support part (3) and clamp both end parts (31) against the axle body (1).

8. Connecting structure according to claim 7, **characterized in that** the support part (3) is of substantially symmetrical design with respect to an imaginary plane (80) extending through the centre axis of the axle body (1) and substantially perpendicular to the longitudinal direction of the vehicle.

9. Connecting structure according to one of the preceding claims, **characterized in that** a locking is present between the support part (3) and that part of the axle body (1) which is accommodated in the support part (3).

10. Connecting structure according to claim 9, **characterized in that** the locking is produced by a projection arranged on the support part (3) and a depression arranged in the axle body (1).

## Patentansprüche

1. Verbindungsanordnung zum Verbinden eines runden Achskörpers (1) einer Radachse eines Fahrzeugs und eines Tragarms (2), der sich in der Längsrichtung des Fahrzeugs erstreckt und den Achskörper (1) im Wesentlichen senkrecht schneidet,
umfassend ein zwischen dem Achskörper (1) und dem Tragarm (2) angeordnetes Halteteil (3), das eine Ausnehmung aufweist, in der ein Teil des Achskörpers (1) aufgenommen ist, und das betrachtet in der Umfangsrichtung des Achskörpers (1) Endstücke (31) hat,
und außerdem umfassend zwei im Wesentlichen U-förmige Klemmbügel (4), die um den Achskörper (1) auf beiden Seiten des Tragarms (2) laufen und durch die das Halteteil (3) und der Teil des Achskörpers (1), der in diesem aufgenommen ist, an dem Tragarm (2) festgelegt sind,
wobei der Achskörper (1) im montierten Zustand als Folge einer durch die Klemmbügel (4) gelieferten Klemmkraft derart in die Ausnehmung gedrückt ist, dass er an der Innenwand der Ausnehmung anliegt, und
wobei die Klemmbügel (4) an dem im Wesentlichen komplementären Umfangsabschnitt des Achskörpers (1) anliegen,
**dadurch gekennzeichnet, dass** die Klemmbügel (4) an der Außenseite von mindestens einem der Endstücke (31) des Halteteils (3) anliegen und das mindestens eine Endstück (31) gegen den Achskörper (1) klemmen.

2. Verbindungsanordnung nach Anspruch 1, **dadurch gekennzeichnet, dass** die Innenwand der Ausnehmung den Teil des Achskörpers (1), der in der Ausnehmung aufgenommen ist, über einen Winkel von mindestens 180° in der Umfangsrichtung umgibt.

3. Verbindungsanordnung nach Anspruch 1 oder 2, **dadurch gekennzeichnet, dass** die im Wesentlichen U-förmigen Klemmbügel (4) zwei im Wesentlichen parallele und im Wesentlichen gerade Schenkel (41) mit einem zwischen diesen angeordneten gekrümmten Abschnitt (44) aufweisen, wobei die Schenkel (41) mit einem Abstand zueinander angeordnet sind, der größer als der Radius des Achskörpers (1) ist, und wobei der gekrümmte Abschnitt (44) einen Abschnitt aufweist, der im montierten Zustand an dem Achskörper (1) mit einem im Wesentlichen dem Radius des Achskörpers (1) entsprechenden Krümmungsradius anliegt, und wobei ein sich erweiternder Abschnitt (46) zwischen mindestens einem der Schenkel (41) und dem konstant gekrümmten Abschnitt (44), der an dem Achskörper (1) anliegt, vorgesehen ist.

4. Verbindungsanordnung nach einem der Ansprüche 1-3, **dadurch gekennzeichnet, dass** das mindestens eine Endstück (31) des Halteteils (3), an dem die Klemmbügel (4) anliegen, einen verdickten Bereich (32) an der radial äußeren Seite hat.

5. Verbindungsanordnung nach einem der vorherigen Ansprüche, **dadurch gekennzeichnet, dass** das mindestens eine Endstück (31) des Halteteils (3), an dem die Klemmbügel (4) anliegen, im Wesentlichen keilförmig an dem Ende ist, um mit dem sich erweiternden Abschnitt (46) der Klemmbügel (4) wechselzuwirken, um das Endstück (31) gegen den Achskörper (1) zu klemmen.

6. Verbindungsanordnung nach einem der vorherigen Ansprüche, **dadurch gekennzeichnet, dass** sich das mindestens eine Endstück (31) über die Klemmbügel (4) bezüglich der Achsrichtung des Achskörpers (1) erstreckt.

7. Verbindungsanordnung nach einem der vorherigen Ansprüche, **dadurch gekennzeichnet, dass** die Klemmbügel (4) an der Außenseite von beiden Endstücken (31) des Halteteils (3) anliegen und beide Endstücke (31) gegen den Achskörper (1) klemmen.

8. Verbindungsanordnung nach Anspruch 7, **dadurch gekennzeichnet, dass** das Halteteil (3) im Wesentlichen symmetrisch bezüglich einer imaginären Ebene (80) ausgebildet ist, die durch die Mittelachse des Achskörpers (1) und im Wesentlichen senkrecht zu der Längsrichtung des Fahrzeugs verläuft.

9. Verbindungsanordnung nach einem der vorherigen Ansprüche, **dadurch gekennzeichnet, dass** eine Arretierung zwischen dem Halteteil (3) und dem Teil des Achskörpers (1), der in dem Halteteil (3) aufgenommen ist, vorgesehen ist.

10. Verbindungsanordnung nach Anspruch 9, **dadurch gekennzeichnet, dass** die Arretierung durch einen an dem Halteteil (3) vorgesehenen Vorsprung und eine in dem Achskörper (1) vorgesehene Vertiefung gebildet ist.

## Revendications

1. Structure de raccordement pour raccorder un corps rond d'essieu (1) d'un essieu de roue d'un véhicule et un bras de support (2) qui s'étend dans la direction longitudinale du véhicule et traverse sensiblement perpendiculairement le corps d'essieu (1),
ayant, positionné entre le corps d'essieu (1) et le bras de support (2), une partie de support (3) qui est prévue avec un évidement, dans lequel une partie du corps d'essieu (1) est logée et qui a des parties d'extrémité (31), lorsque l'on regarde dans la direction circonférentielle du corps d'essieu (1),
et ayant également deux sangles de serrage (4) sensiblement en forme de U qui s'étendent autour du corps d'essieu (1) de chaque côté du bras de support (2) et au moyen desquelles la partie de support (3) et cette partie du corps d'essieu (1) qui est logée à l'intérieur de celle-ci, sont fixées sur le bras de support (2),
dans laquelle le corps d'essieu (1), à l'état assemblé, est pressé dans l'évidement en raison d'une force de serrage fournie par les sangles de serrage (4), de sorte qu'il s'appuie contre la paroi interne de l'évidement, et
dans laquelle les sangles de serrage (4) s'appuient contre la partie sensiblement complémentaire de la circonférence du corps d'essieu (1),
**caractérisée en ce que** les sangles de serrage (4) s'appuient contre le côté externe d'au moins l'une des parties d'extrémité (31) de la partie de support (3) et serrent la au moins une partie d'extrémité (31) contre le corps d'essieu (1).

2. Structure de raccordement selon la revendication 1, **caractérisée en ce que** la paroi interne de l'évidement entoure cette partie du corps d'essieu (1) qui est logée dans l'évidement sur un angle d'au moins 180° dans la direction circonférentielle.

3. Structure de raccordement selon la revendication 1 ou 2, **caractérisée en ce que** les sangles de serrage (4) sensiblement en forme de U comprennent deux membres (41) sensiblement parallèles et sensiblement droits avec une section incurvée (44) située entre eux, lesquels membres (41) sont positionnés à une certaine distance l'un de l'autre qui est supérieure au rayon du corps d'essieu (1), et laquelle section incurvée (44) comprend une section qui, à l'étape assemblée, s'appuie contre le corps d'essieu (1) avec un rayon de courbure qui correspond sensiblement au rayon du corps d'essieu (1), et dans laquelle une section d'élargissement (46) est présente entre au moins l'un des membres (41) et la section incurvée (44) de manière constante s'appuyant contre le corps d'essieu (1).

4. Structure de raccordement selon l'une quelconque des revendications 1 à 3, **caractérisée en ce que** la au moins une partie d'extrémité (31) de la partie de support (3) contre laquelle les sangles de serrage (4) s'appuient, a une partie épaissie (32) sur le côté radialement externe.

5. Structure de raccordement selon l'une quelconque des revendications précédentes, **caractérisée en ce que** la au moins une partie (31) de la partie de support (3) contre laquelle les sangles de serrage (4) s'appuient, est sensiblement en forme de cale au niveau de l'extrémité afin d'interagir avec la section d'élargissement (46) des sangles de serrage (4) pour serrer la partie d'extrémité (31) contre le corps d'essieu (1).

6. Structure de raccordement selon l'une quelconque des revendications précédentes, **caractérisée en ce que** la au moins une partie (31), lorsque l'on regarde dans la direction axiale du corps d'essieu (1), s'étend au-delà des sangles de serrage (4).

7. Structure de raccordement selon l'une quelconque des revendications précédentes, **caractérisée en ce que** les sangles de serrage (4) s'appuient contre le côté externe des deux parties d'extrémité (31) de la partie de support (3) et serrent les deux parties d'extrémité (31) contre le corps d'essieu (1).

8. Structure de raccordement selon la revendication 7, **caractérisée en ce que** la partie de support (3) a une conception sensiblement symétrique par rapport à un plan imaginaire (80) s'étendant à travers l'axe central du corps d'essieu (1) et sensiblement perpendiculaire à la direction longitudinale du véhicule.

9. Structure de raccordement selon l'une quelconque des revendications précédentes, **caractérisée en ce qu'**un blocage est présent entre la partie de support (3) et cette partie du corps d'essieu (1) qui est logée dans la partie de support (3).

10. Structure de raccordement selon la revendication 9, **caractérisée en ce que** le blocage est produit par une saillie agencée sur la partie de support (3) et une dépression agencée dans le corps d'essieu (1).
